# EUROPEAN PATENT SPECIFICATION

(11) **EP 1 735 153 B1**
(45) Date of publication and mention of the grant of the patent: **06.01.2010**
(21) Application number: 04726731.5
(22) Date of filing: 09.04.2004
(51) Int. Cl.: B32B 27/30, B32B 27/32

(54) **A MULTI LAYER FILM BASED ON POLYPROPYLENE HAVING BARRIER PROPERTIES**
AUF POLYPROPYLEN BASIERENDER MEHRSCHICHTFILM MIT SPERREIGENSCHAFTEN
FILM MULTICOUCHE A BASE DE POLYPROPYLENE PRESENTANT DES PROPRIETES BARRIERES

(43) Date of publication of application: 27.12.2006
(73) Proprietor: VIBAC S.p.A., I-15040 Ticineto (Alessandria) (IT)
(72) Inventor: GUIDA, Filippo, I-67100 L'Aquila (IT); CAMPANELLA, Vincenzo, I-67100 Paganica (L'Aquila) (IT)
(74) Representative: Gerbino, Angelo
(86) International application number: PCT/IT2004/000195
(87) International publication number: WO 2005/097498

(56) References cited:
- EP-A- 0 441 666
- EP-A- 0 457 648
- US-A- 4 355 721
- US-B1- 6 316 114

## Description

The present invention relates to a film based on polypropylene, in particular biaxially oriented polypropylene, which is usable for the fabrication of packagings for the containment of food products thanks to its particular chemical and physical characteristics, among which are low density, good mechanical strength and transparency. However, many of these food products require that the associated fats be protected from oxidation which can be caused by the presence of oxygen within the packaging. Such presence is caused by the low barrier properties exhibited by bi-oriented polypropylene film. In particular and depending on its thickness, the oxygen permeability value of a film of this type lies in a range between 1800 and 2200 cm³/m²*d*bar (measured according to ASTM D3985) which is not compatible with the normal requirements of use.

Consequently it is conventional to improve the barrier properties of a polypropylene-based film by adding to it materials suitable to allow it to obtain values of oxygen permeability of the order of 100 cm³/m²*d*bar, again measured according to ASTM D3985. Typically, ethylene-alcohol vinyl copolymers (EVOH) are used for this purpose.

For example, EP-A-311 293 describes the use of an EVOH copolymer in the form of a base inner layer enclosed between outer layers of polyolefin material.

US-A-4 650 721 on the other hand describes the use of an EVOH copolymer in the form of an outer layer of cladding over a base layer constituted essentially of polypropylene.

Both these arrangements have disadvantages. In fact, the EVOH copolymer is decidedly more expensive and mechanically less strong than polypropylene. Therefore, its use to form the base layer, which constitutes the major part of the film, results in an increase in the costs and a reduction in the mechanical properties in comparison with films containing only polypropylene. On the other hand, EVOH copolymer is strongly subject to hydrolysis in a moist environment. Therefore it degrades rapidly when it is utilised to form an outer cladding layer which is exposed to environmental moisture.

Furthermore, EP-A-0 441 666 discloses a multilayered food package comprising in the following sequence a first outermost PP layer, a first tie layer, a layer of a blend comprising a copolymer of EVOH, a PP and a compatibilizing agent, a layer consisting of a copolymer of EVOH, a second tie layer and a second outermost PP layer.

For the purpose of overcoming these disadvantages the subject of the present invention is a film having the characteristics indicated in the following Claim 1. Preferential characteristics of the film of the invention are indicated in the dependent Claims.

The fact that the EVOH copolymer is present in an intermediate layer and therefore not exposed to the outside, avoids it being damaged by environmental moisture with consequent degradation and loss of its barrier properties. At the same time the EVOH copolymer is not present in the inner base layer, which is that which constitutes the majority as far as mass and thickness of the film is concerned and to a large measure determines its mechanical properties. Consequently, the film of the invention is decidedly more economical and mechanically stronger than prior art films in which the EVOH copolymer is the essential component of the inner base layer.

By indicating the base layer as A, the at least one intermediate layer as B and the outer covering layer as C, the minimum configuration of the film of the invention is therefore of the type CBAC. This configuration can be completed with the addition of a desired number of layers. For example, by inserting a further intermediate layer a configuration of type CBABC is achieved, in which the further layer B may or may not have barrier properties against oxygen.

The first intermediate layer must also contain, as well as the EVOH copolymer, a compatibility agent of such copolymer with polyolefin, for example a polypropylene chemically modified by means of grafting with maleic anhydride. In order to improve the adhesion of the various layers, and preferably, but not necessarily for the purpose of the structure, this compatibility agent may be present also in the base layer and in the covering layers in contact with an intermediate layer containing the EVOH copolymer. This compatibility agent is however decidedly more expensive than polypropylene which is the principal component of the base layer constituting the greater part of the film. Therefore, for reasons of economy, it is possible to form other configurations of film in which the base layer is constituted essentially of polypropylene and, between this and the intermediate layer containing the EVOH copolymer, there is interposed an auxiliary compatibility layer of reduced thickness, which is formed for example of polypropylene and a component for ensuring compatibility of EVOH copolymer with polyolefin. By indicating such an auxiliary layer as D it is thus possible to have configurations of type CBDADBC and CBDAC. For reasons of process simplicity it can be convenient to have an auxiliary layer adjacent both sides of the base layer even in the presence of a single intermediate layer, and therefore achieve a configuration of the type CBDADC.

Advantageously the base layer has a thickness lying between 7 and 70 µm and is composed of polypropylene homopolymer or a mixture of polypropylene homopolymer - for example with a melting temperature lying between 150 and 170°C and melt flow index (MFI) lying between 1 and 5 g/10 min at T of 230°C and 2.16kg - in proportion lying between 50 and 100%, preferably between 60 and 80%, by weight of the layer and by a polypropylene homopolymer chemically modified by means of grafting on the polymer chains of molecules of maleic anhydride in ratio lying between 50 and 0% by weight of the layer. This chemically modified polypropylene homopolymer usable for the base layer may, for example, be Fusabond M613-05 product of DuPont. Smaller quantities of conventional additives can likewise be added to this layer, such as, for example, antistatic, slip and anti-UV agents, the purpose of which is that of modifying specific properties of the film, which do not have a direct influence on the barrier properties.

Advantageously, the first intermediate layer has a thickness lying between 1 and 6 µm and preferably between 2 and 5 µm and is composed of a copolymer of ethylene and vinyl alcohol - having a percentage of ethylene lying between 5 and 700, preferably between 20 and 60%, more preferably between 30 and 500, and MFI lying between 3 and 10 g/10min at 190°C and 2.16kg - in percentages lying between 30 and 90%, preferably between 50 and 80%, by weight of the layer, and by a polypropylene homopolymer chemically modified by grafting on the polymer chains of molecules of maleic anhydride in quantities complementary to 100%. Such chemically modified polypropylene homopolymer usable for this layer may for example be Fusabond M613-05 product of DuPont, whilst the ethylene and vinyl alcohol copolymer may for example be Eval G156b product of Kuraray.

Advantageously, the first covering layer has a thickness lying between 0.5 and 3 µm, preferably between 1 and 2 µm, and is composed of a ternary copolymer of propylene-ethylene-butylene - for example with a melting point lying between 120 and 140 °C and MFI lying between 2 and 10 g/10min at 230 °C and 2.16kg, preferably between 3 and 8 g/10min - in percentages lying between 40 and 100%, preferably between 60 and 80% by weight of the layer, and by a polypropylene homopolymer chemically modified by grafting on the polymer chains of molecules of maleic anhydride in quantities complementary to 100%. Such chemically modified polypropylene homopolymer usable for this layer may for example be Fusabond M613-05 product of DuPont. The ternary copolymer can possibly be replaced by a polypropylene homopolymer or by a mixture of polypropylene homopolymer, with a melting temperature between 150 and 170°C and MFI lying between 1 and 5 g/10 min at T of 230°C at 2.16 kg in proportions lying between 50 and 100% of the weight of the layer. The first covering layer may likewise have smaller quantities of anti-blocking additives.

Advantageously, the second intermediate layer has a thickness lying between 1 and 6µm, preferably between 1.5 and 4µm, and has a composition similar to that of the first intermediate layer. Alternatively, it can be entirely composed of polypropylene homopolymer with a melting point lying between 150 and 170 °C and MFI lying between 1 and 8 g/10min, preferably between 2 and 6 g/10 min, at 230°C at 2.16 kg.

Advantageously, the second covering layer has a thickness lying between 0.5 and 3µm, preferably between 1 and 2µm, and has a composition similar to that of the first intermediate layer. Alternatively, it can be substantially entirely composed of a ternary propylene-ethylene-butylene copolymer with a melting point lying between 120 and 140°C and MFI lying between 2 and 10 g/10min at 230°C at 2.16 kg and preferably between 3 and 8 g/10min. Smaller quantities of anti-blocking additives may moreover be added to it.

Advantageously, the first and second auxiliary layer may have a thickness lying between 0.5 and 5µm and a composition of the type indicated for the base layer.

The film of the invention can be produced by means of an extrusion and biaxial orientation procedure, the general characteristics of which are known. Advantageously, the base layer and the first intermediate layer can be extruded by means of respective twin screw co-rotating extruders to permit an easy mixing of components, whilst the remaining layers can be extruded by means of twin screw or single screw extruders.

The extruded film is then advantageously subjected to a sequential biaxial orientation in which, in a first phase, it is stretched in the longitudinal direction with respect to the machine sense (MDO) in a draw ratio lying between 4:1 and 6:1, and in a second phase is stretched transversely of the machine sense (TDO) in a draw ratio lying between 6:1 and 8:1.

After biaxial orientation the film can be subjected to electric discharge treatment (corona treatment) or with flame, for surface activation whereby to render it suitable for printing and /or for further treatments such as coupling with other films of plastics material, paper or aluminium.

In particular, a film of the present invention having any of the configurations described above can further comprise a metallised layer, which may be applied by conventional metallisation techniques. Such a film has further improved barrier properties against oxygen and water vapour in the same way as the application of a further metallised layer improves the barrier properties of films based on biaxially oriented polypropylene of conventional type. In more detail, the presence of a metallised layer makes it possible to improve the barrier properties of the film against oxygen and water vapour by an order of magnitude even if this is to the detriment of its transparency. This improvement makes it possible to use metallised films of the present invention in those applications where very much more expensive films and/or structures are usually used, comprising a sheet of aluminium on its own or in combination.

Further advantages and characteristics of the present invention will be evident from the following examples of film compositions provided by way of non-limitative example, in which all the percentages are to be considered as percentages by weight if not otherwise indicated, and the values expressed in µm refer to the respective thicknesses of the various layers.

**EXAMPLE 1**

| | | | |
|---|---|---|---|
| Layer A | - polypropylene homopolymer MFI 2 | 68% | 21.8µm |
| | Fusabond M613-05 | 30% | |
| | Ampacet 400687 (antistatic additive) | 2% | |
| Layer B1 | - Eval G156B | 70% | 3µm |
| | Fusabond M613-05 | 30% | |
| Layer C1 | - Propylene-ethylene-butylene terpolymer | 69.5% | 1.5µm |
| | Fusabond M613-05 | 30% | |
| | Schulman AB PP 10 (antiblocking additive) | 0.5% | |
| Layer B2 | - Polypropylene homopolymer MFI 3 | 100% | 2.5µm |
| Layer C2 | - Propylene-ethylene-butylene terpolymer | 99.5% | 1.2µm |
| | Schulman AB PP 10 | 0.5% | |

**EXAMPLE 2**

| | | | |
|---|---|---|---|
| Layer A | - polypropylene homopolymer MFI 2 | 68% | µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - Propylene-ethylene-butylene terpolymer | 99.5% | 1.5µm |
| | Schulman AB PP 10 | 0.5% | |
| Layer B2 | - Polypropylene homopolymer MFI 3 | 100% | 2.5µm |
| Layer C2 | - Propylene-ethylene-butylene terpolymer | 99.5% , | 1.2µm |
| Schulman AB PP 10 | | | 0.5% |

**EXAMPLE 3**

| | | | |
|---|---|---|---|
| Layer A | - polypropylene homopolymer MFI 2 | 68% | 21.8µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - Polypropylene homopolymer MFI 3 | 69.5% | 1.5µm |
| | Fusabond M613-05 | 30% | |
| | Schulman AB PP 10 | 0.5% | |
| Layer B2 | - Polypropylene homopolymer MFI 3 | 100% | 2.5µm |
| Layer C2 | - Propylene-ethylene-butylene terpolymer | 99.5% | 1.2µm |
| | Schulman AB PP 10 | 0.5% | |

**EXAMPLE 4**

| | | | |
|---|---|---|---|
| Layer A | - polypropylene homopolymer MFI 2 | 68% | 21.8µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - Polypropylene homopolymer MFI 3 | 99.5% | 1.5µm |
| | Schulman AB PP 10 | 0.5% | |
| Layer B2 | - Polypropylene homopolymer MFI 3 | 100% | 2.µm |
| Layer C2 | - Propylene-ethylene-butylene terpolymer | 99.5% | 1.2µm |
| | Schulman AB PP 10 | 0.5% | |

**EXAMPLE 5**

| | | | |
|---|---|---|---|
| Layer A | - polypropylene homopolymer MFI 2 | 98% | 21.8µm |
| | Ampacet 400687 | 2% | |
| Layer B1 | - Eval G156B | 70 % | 3µm |
| | Fusabond M613-05 | 30% | |
| Layer C1 | - Propylene-ethylene-butylene terpolymer | 69.5% | 1.5µm |
| | Fusabond M613-05 | 30% | |
| | Schulman AB PP 10 | 0.5% | |
| Layer B2 | - Polypropylene homopolymer MFI 3 | 100% | 2.5µm |
| Layer C2 | - Propylene-ethylene-butylene terpolymer | 99.5% | 1.2µm |
| | Schulman AB PP 10 | 0.5% | |

**EXAMPLE 6**

| | | | |
|---|---|---|---|
| Layer A | - polypropylene homopolymer MFI 2 | 88% | 21.8µm |
| | Fusabond M613-05 | 10% | |
| | Ampacet 400687 | 2% | |
| Layer B1 | - Eval G156B | 70 % | 3µm |
| | Fusabond M613-05 | 30% | |
| Layer C1 | - Propylene-ethylene-butylene terpolymer | 69.5% | 1.5µm |
| | Fusabond M613-05 | 30% | |
| | Schulman AB PP 10 | 0.50 | |
| Layer B2 | - Polypropylene homopolymer MFI 3 | 100% | 2.5µm |
| Layer C2 | - Propylene-ethylene-butylene terpolymer | 99.5% | 1.2µm |
| | Schulman AB PP 10 | 0.5% | |

**EXAMPLE 7**

| | | | |
|---|---|---|---|
| Layer A | - polypropylene homopolymer MFI 2 | 98% | 21.8µm |
| | Ampacet 400687 | 2% | |
| Layer B1 | - Eval G156B | 80 % | 3µm |
| | Fusabond M613-05 | 20% | |
| Layer C1 | - Polypropylene homopolymer MFI 3 | 69.5% | 1.5µm |
| | Fusabond M613-05 | 30% | |
| | Schulman AB PP 10 | 0.5% | |
| Layer B2 | - Polypropylene homopolymer MFI 3 | 100% | 2.5µm |
| Layer C2 | Propylene-ethylene-butylene terpolymer | 99.5% | 1.2µm |
| | Schulman AB PP 10 | 0.5% | |

**EXAMPLE 8**

| | | | |
|---|---|---|---|
| Layer A | - polypropylene homopolymer MFI 2 | 98% | 21.8µm |
| | Ampacet 400687 | 2% | |
| Layer B1 | - Eval G156B | 80 % | 3µm |
| | Fusabond M613-05 | 20% | |
| Layer C1 | - Polypropylene homopolymer MFI 3 | 99.5% | 1.5µm |

| | | | |
|---|---|---|---|
| | Schulman AB PP 10 | 0.5% | |
| Layer B2 | - Polypropylene homopolymer MFI 3 | 100% | 2.5µm |
| Layer C2 | - Propylene-ethylene-butylene terpolymer | 99.5% | 1.2µm |
| | Schulman AB PP 10 | 0.5% | |

**EXAMPLE 9**

| | | | |
|---|---|---|---|
| Layer A | - polypropylene homopolymer MFI 2 | 68% | 21.3µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - Propylene-ethylene-butylene terpolymer | 69.5% | 1.5µm |
| | Fusabond M613-05 | 30% | |
| | Schulman AB PP 10 | 0.5% | |
| Layer B2 | - Eval G156B Fusabond M613-05 | 70 % 30% | 3µm |
| Layer C2 | - Propylene-ethylene-butylene terpolymer | 69.5% | 1.2µm |
| | Fusabond M613-05 | 30% | |
| | Schulman AB PP 10 | 0.5% | |

**EXAMPLE 10**

| | | | |
|---|---|---|---|
| Layer A | - polypropylene homopolymer MFI 2 | 68% | 21.3µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - polypropylene homopolymer MFI 3 | 69.5% | 1.5µm |
| | Fusabond M613-05 | 30% | |
| | Schulman AB PP 10 | 0.5% | |
| Layer B2 | - Eval G156B | 70 % | 3µm |
| | Fusabond M613-05 | 30% | |
| Layer C2 | - polypropylene homopolymer MFI 3 | 69.5% | 1.2µm |
| | Fusabond M613-05 | 30% | |
| | Schulman AB PP 10 | 0.5% | |

**EXAMPLE 11**

| | | | |
|---|---|---|---|
| Layer A | - polypropylene homopolymer MFI 2 | 68% | 21.3µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - polypropylene homopolymer MFI 3 | 69.5% | 1.5µm |
| | Fusabond M613-05 | 30% | |
| | Schulman AB PP 10 | 0.5% | |
| Layer B2 | - Eval G156B | 70 % | 3µm |
| | Fusabond M613-05 | 30% | |
| Layer C2 | - Propylene-ethylene-butylene | | |
| | terpolymer | 69.5% | 1.2µm |
| | Fusabond M613-05 | 30% | |
| | Schulman AB PP 10 | 0.5% | |

**EXAMPLE 12**

| | | | |
|---|---|---|---|
| Layer A | - polypropylene homopolymer MFI 2 | 68% | 21.3µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - polypropylene homopolymer MFI 3 | 99.5% | 1.5µm |
| | Schulman AB PP 10 | 0.5% | |
| Layer B2 | - Eval G156B | 70 % | 3µm |
| | Fusabond M613-05 | 30% | |
| Layer C2 | - Propylene-ethylene-butylene | | |
| | terpolymer | 99.5% | 1.2µm |
| | Schulman AB PP 10 | 0.5% | |

**EXAMPLE 13**

| | | | |
|---|---|---|---|
| Layer A | - polypropylene Homopolymer MFI 2 | 98% | 21.3µm |
| | Ampacet 400687 | 2% | |
| Layer B1 | - Eval G156B | 70 % | 3µm |
| | Fusabond M613-05 | 30% | |
| Layer C1 | - polypropylene homopolymer MFI 3 | 69.5% | 1.5µm |
| | Fusabond M613-05 | 30% | |
| | Schulman AB PP 10 | 0.5% | |
| Layer B2 | - Eval G156B | 70 % | 3µm |
| | Fusabond M613-05 | 30% | |
| Layer C2 | - Propylene-ethylene-butylene | | |
| terpolymer | | 69.5% | 1.2µm |
| Fusabond M613-05 | | 30% | |
| Schulman AB PP 10 | | 0.5% | |

**EXAMPLE 14**

| | | | |
|---|---|---|---|
| Layer A | - polypropylene homopolymer MFI 2 | 98% | 21.3µm |
| | Ampacet 400687 | 2% | |
| Layer B1 | - Eval G156B | 80 % | 3µm |
| | Fusabond M613-05 | 20% | |
| Layer C1 | - polypropylene homopolymer MFI 3 | 69.5% | 1.5µm |
| | Fusabond M613-05 | 30% | |
| | Schulman AB PP 10 | 0.5% | |
| Layer B2 | - Eval G156B | 80 % | 3µm |
| | Fusabond M613-05 | 20% | |
| Layer C2 | - Propylene-ethylene-butylene | | |
| | terpolymer | 99.5% | 1.2µm |
| | Schulman AB PP 10 | 0.5% | |

**EXAMPLE 15**

| | | | |
|---|---|---|---|
| Layer A | - polypropylene homopolymer MFI 2 | 68% | 24.3µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - polypropylene-ethylene-butylene | | |
| | terpolymer | 69.5% | 1.5µm |
| | Fusabond M613-05 | 30% | |
| | Schulman AB PP 10 | 0.5% | |
| Layer C2 | - polypropylene-ethylene-butylene | | |
| | terpolymer | 99.5% | 1.2µm |
| | Schulman AB PP 10 | 0.5% | |

**EXAMPLE 16**

| | | | |
|---|---|---|---|
| Layer A | - polypropylene homopolymer MFI 2 | 68% | 24.3µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - polypropylene-ethylene-butylene | | |
| | terpolymer | 99.5% | 1.5µm |
| | Schulman AB PP 10 | 0.5% | |
| Layer C2 | - Propylene homopolymer MFI 3 | 99.5% | 1.2µm |
| | Schulman AB PP 10 | 0.5% | |

**EXAMPLE 17**

| | | | |
|---|---|---|---|
| Layer A | - polypropylene homopolymer MFI 2 | 98% | 17.8µm |
| | Ampacet 400687 | 2% | |
| Layer D1 | - polypropylene homopolymer MFI 2 | 68% | 2µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - polypropylene homopolymer MFI 3 | 69.5% | 1.5µm |
| | Fusabond M613-05 | 30% | |
| | Schulman AB PP 10 | 0.5% | |
| Layer D2 | - polypropylene homopolymer MFI 2 | 68% | 2µm |
| | Fusabond M613-05 | 30% | |
| | Ampacet 400687 | 2% | |
| Layer B2 | - polypropylene homopolymer MFI 3 | 100% | 2.5µm |
| Layer C2 | - Propylene-ethylene-butylene | | |
| | terpolymer | 99.5% | 1.2µm |
| | Schulman AB PP 10 | 0.5% | |

**EXAMPLE 18**

| | | | |
|---|---|---|---|
| Layer A | - polypropylene homopolymer MFI 2 | 98% | 17.3µm |
| | Ampacet 400687 | 2% | |
| Layer D1 | - polypropylene homopolymer MFI 2 | 68% | 2µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - polypropylene homopolymer MFI 3 | 99.5% | 1.5µm |
| | Schulman AB PP 10 | 0.5% | |
| Layer D2 | - polypropylene homopolymer MFI 2 | 68% | 2µm |
| | Fusabond M613-05 | 30% | |
| | Ampacet 400687 | 2% | |
| Layer B2 | - Eval G156B | 70 % | 3µm |
| | Fusabond M613-05 | 30% | |
| Layer C2 | - Propylene-ethylene-butylene | | |
| | terpolymer | 99.5% | 1.2µm |
| | Schulman AB PP 10 | 0.5% | |

**EXAMPLE 19**

| | | | |
|---|---|---|---|
| Layer A | - polypropylene homopolymer MFI 2 | 98% | 17.8µm |
| | Ampacet 400687 | 2% | |
| Layer D1 | - polypropylene homopolymer MFI 2 | 68% | 2µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - polypropylene homopolymer MFI 3 | 69.5% | 1.5µm |
| | Fusabond M613-05 | 30% | |
| | Schulman AB PP 10 | 0.5% | |
| Layer D2 | - polypropylene homopolymer MFI 2 | 98% | 2µm |
| | Ampacet 400687 | 2% | |
| Layer B2 | - polypropylene homopolymer MFI 3 | 100% | 2.5µm |
| Layer C2 | - Propylene-ethylene-butylene | | |
| | terpolymer | 99.5% | 1.2µm |
| | Schulman AB PP 10 | 0.5% | |

**EXAMPLE 20**

| | | | |
|---|---|---|---|
| Layer A | - polypropylene homopolymer MFI 2 | 98% | 20.3µm |
| | Ampacet 400687 | 2% | |
| Layer D1 | - polypropylene homopolymer MFI 2 | 68% | 2µm |
| | Fusabond M613-05 | 30% | |
| | Ampacet 400687 | 2% | |
| Layer B1 | - Eval G156B | 70 % | 3µm |
| | Fusabond M613-05 | 30% | |
| Layer C1 | - polypropylene homopolymer MFI 3 | 69.5% | 1.5µm |
| | Fusabond M613-05 | 30% | |
| | Schulman AB PP 10 | 0.50 | |
| Layer D2 | - polypropylene homopolymer MFI 2 | 98% | 2µm |
| | Ampacet 400687 | 2% | |
| Layer C2 | - Propylene-ethylene-butylene | | |
| | terpolymer | 99.5% | 1.2µm |
| | Schulman AB PP 10 | 0.5% | |

Table 1 which follows plots the oxygen permeability values of films produced starting from the compositions of the above-indicated examples. These values are measured according to the ASTM D3985 method at 23 °C and 0% relative humidity.

**Table 1 - values of oxygen permeabililty**

| | OTR - 23 °C 0% RH | Method | Value |
|---|---|---|---|
| Example 1 | cm³ /m²*d*bar | ASTM D3985 | 25 |
| Example 2 | cm³ /m²*d*bar | ASTM D3985 | 33 |
| Example 3 | cm³/m*d*bar | ASTM D3985 | 67 |
| Example 4 | cm³/m*d*bar | ASTM D3985 | 46 |
| Example 5 | cm³/m*d*bar | ASTM D3985 | 53 |
| Example 6 | cm3/m2*d*bar | ASTM D3985 | 80 |
| Example 7 | cm³/m2*d*bar | ASTM D3985 | 13 |
| Example 8 | cm³/m^{2*}d^{*}bar | ASTM D3985 | 52 |
| Example 9 | cm³/m²*d*bar | ASTM D3985 | 15 |
| Example 10 | cm³/m2*d*bar | ASTM D3985 | 18 |
| Example 11 | cm³/m2*d*bar | ASTM D3985 | 22 |
| Example 12 | cm³/m2*d*bar | ASTM D3985 | 35 |
| Example 13 | cm³/m²*d*bar | ASTM D3985 | 28 |
| Example 14 | cm³/m²*d*bar | ASTM D3985 | 16 |
| Example 15 | cm³/m2*d*bar | ASTM D3985 | 58 |
| Example 16 | cm³/m2*d*bar | ASTM D3985 | 72 |
| Example 17 | cm³/m2*d*bar | ASTM D3985 | 65 |
| Example 18 | cm³/m²*d*bar | ASTM D3985 | 34 |
| Example 19 | cm³/m2*d*bar | ASTM D3985 | 75 |
| Example 20 | cm³/m²*d*bar | ASTM D3985 | 69 |

From these values it can be seen that the films of the invention have an oxygen permeability less than or equal to 80 cm³/m²*d*bar whilst remaining transparent. The films of the invention further have a water vapour permeability equivalent to that of conventional films, that is to say less than or equal to 6g/m²*d*bar.

Naturally, the principle of the invention remaining the same, the details of construction and the embodiments can be widely varied with respect to what has been described purely by way of example, without by this departing from its scope.

## Claims

1. A biaxially oriented multilayer film comprising:
- a base layer formed by at least 50% polypropylene,
- first and second outer covering layers disposed on opposite sides of the base layer and comprising at least one respective polyolefin homopolymer or copolymer, and
- at least one first intermediate layer having barrier properties against oxygen, disposed between the first covering layer and the base layer and comprising a copolymer of ethylene and vinyl alcohol and a compatibility agent for the said copolymer with polyolefin, the base layer and the covering layers not substantially including copolymer of ethylene and vinyl alcohol.

2. A film according to Claim 1, further including a second intermediate layer disposed between the second covering layer and the base layer.

3. A film according to Claim 1, in which the second intermediate layer comprises a copolymer of ethylene and vinyl alcohol and a compatibility agent for the said copolymer with polyolefin.

4. A film according to any preceding Claim, in which the said base layer and possibly the said first and second covering layer further include the compatibility agent for the said copolymer with polyolefin.

5. A film according to any preceding Claim, further including a first auxiliary compatibility layer interposed between the said base layer and the said first intermediate layer, said base layer being substantially formed by polypropylene and the said first auxiliary layer being formed by polypropylene and a compatibility agent for the said copolymer with polyolefin.

6. A film according to any preceding Claim, further including a second auxiliary compatibility layer interposed between the said base layer and the second intermediate layer, if present, or the second covering layer, the said base layer being substantially formed by polypropylene and the said second auxiliary layer being formed by polypropylene and, if in contact with a layer containing the said copolymer, by a compatibility agent for the said copolymer with polyolefin.

7. A film according to any preceding Claim, in which the compatibility agent for the said copolymer with polyolefin is a polypropylene chemically modified by grafting with maleic anhydride.

8. A film according to any preceding Claim, in which the said first and second covering layer have a thickness lying between 0.5 and 3µm preferably between 1 and 2µm.

9. A film according to any preceding Claim, in which the first intermediate layer and the second intermediate layer, if present, have a thickness lying between 1 and 6pm preferably between 2 and 5µm.

10. A film according to any preceding Claim, in which the said base layer has a thickness lying between 7 and 70µm.

11. A film according to any preceding Claim from 5 to 10, in which the first auxiliary layer and the second auxiliary layer, if present, have a thickness lying between 0.5 and 5µm.

12. A film according to any preceding Claim, in which the said base layer and, if present, the said first and second auxiliary layers comprise polypropylene in ratios from 50 to 100% by weight and polypropylene chemically modified by means of grafting with maleic anhydride in ratios of from 50 to 0% by weight.

13. A film according to any preceding Claim, in which the first intermediate layer and the second intermediate layer, if present, comprise a copolymer of ethylene and vinyl alcohol in ratios of from 30 to 90% by weight and polypropylene chemically modified by grafting with maleic anhydride in ratios of from 70 to 10% by weight.

14. A film according to any preceding Claim, in which the said first and second covering layer comprise a polyolefin homopolymer or copolymer in ratios of from 40 to 100% by weight and polypropylene chemically modified by grafting with maleic anhydride in ratios of from 60 to 0% by weight.

15. A film according to any preceding Claim, in which the said polyolefin homopolymer or copolymer of the first and second covering layer is a propylene-ethylene-butylene ternary copolymer and/or polypropylene.

16. A film according to any preceding Claim, further including a metallisation layer.

## Patentansprüche

1. Eine biaxial orientierte mehrschichtige Folie, die folgendes umfasst:
- eine Grundschicht, die durch mindestens 50 % Polypropylen gebildet wird,
- erste und zweite äußere Deckschichten, die auf gegenüber liegenden Seiten der Grundschicht angeordnet sind und mindestens ein jeweiliges Homopolymer oder Copolymer eines Polyolefins umfassen, und
- mindestens eine erste Zwischenschicht, die Barriereeigenschaften gegen Sauerstoff aufweist, die zwischen der ersten Deckschicht und der Grundschicht angeordnet ist und ein Copolymer aus Ethylen und Vinylalkohol und ein Kompatibilitätsmittel für das Copolymer mit Polyolefin umfasst, wobei die Grundschicht und die Deckschichten im Wesentlichen kein Copolymer aus Ethylen und Vinylalkohol beinhalten.

2. Eine Folie nach Anspruch 1, die ferner eine zweite Zwischenschicht einschließt, die zwischen der zweiten Deckschicht und der Grundschicht angeordnet ist.

3. Eine Folie nach Anspruch 1, in der die zweite Zwischenschicht ein Copolymer aus Ethylen und Vinylalkohol und ein Kompatibilitätsmittel für das Copolymer mit Polyolefin umfasst.

4. Eine Folie nach einem vorstehenden Anspruch, in der die Grundschicht und möglicherweise die erste und zweite Deckschicht ferner das Kompatibilitätsmittel für das Copolymer mit Polyolefin beinhalten.

5. Eine Folie nach einem vorstehenden Anspruch, die ferner eine erste zusätzliche Kompatibilitätsschicht einschließt, die zwischen der Grundschicht und der ersten Zwischenschicht eingefügt ist, wobei die Grundschicht im Wesentlichen durch Polypropylen gebildet wird und die erste zusätzliche Schicht durch Polypropylen und ein Kompatibilitätsmittel für das Copolymer mit Polyolefin gebildet wird.

6. Eine Folie nach einem vorstehenden Anspruch, die ferner eine zweite zusätzliche Kompatibilitätsschicht einschließt, die zwischen der Grundschicht und der zweiten Zwischenschicht, falls vorhanden, oder der zweiten Deckschicht eingefügt ist, wobei die Grundschicht im Wesentlichen durch Polypropylen gebildet wird und die zweite zusätzliche Schicht durch Polypropylen und, bei Kontakt mit einer das Copolymer enthaltenden Schicht, ein Kompatibilitätsmittel für das Copolymer mit Polyolefin gebildet wird.

7. Eine Folie nach einem vorstehenden Anspruch, in der das Kompatibilitätsmittel für das Copolymer mit Polyolefin ein Polypropylen ist, das durch Pfropfung mit Maleinsäureanhydrid chemisch modifiziert wurde.

8. Eine Folie nach einem vorstehenden Anspruch, in der die erste und zweite Deckschicht eine Dicke aufweisen, die zwischen 0,5 und 3 µm, vorzugsweise zwischen 1 und 2 µm liegt.

9. Eine Folie nach einem vorstehenden Anspruch, in der die erste Zwischenschicht und die zweite Zwischenschicht, falls vorhanden, eine Dicke aufweisen, die zwischen 1 und 6 µm, vorzugsweise zwischen 2 und 5 µm liegt.

10. Eine Folie nach einem vorstehenden Anspruch, in der die Grundschicht eine Dicke aufweist, die zwischen 7 und 70 µm liegt.

11. Eine Folie nach einem der vorstehenden Ansprüche 5 bis 10, in der die erste zusätzliche Schicht und die zweite zusätzliche Schicht, falls vorhanden, eine Dicke aufweisen, die zwischen 0,5 und 5 µm liegt.

12. Eine Folie nach einem vorstehenden Anspruch, in der die Grundschicht und, falls vorhanden, die erste und zweite zusätzliche Schicht Polypropylen in Verhältnissen von 50 bis 100 Gew.-% und Polypropylen, das durch Pfropfung mit Maleinsäureanhydrid chemisch modifiziert wurde, in Verhältnissen von 50 bis 0 Gew.-% umfassen.

13. Eine Folie nach einem vorstehenden Anspruch, in der die erste Zwischenschicht und die zweite Zwischenschicht, falls vorhanden, ein Copolymer aus Ethylen und Vinylalkohol in Verhältnissen von 30 bis 90 Gew.-% und Polypropylen, das durch Pfropfung mit Maleinsäureanhydrid chemisch modifiziert wurde, in Verhältnissen von 70 bis 10 Gew.-% umfassen.

14. Eine Folie nach einem vorstehenden Anspruch, in der die erste und zweite Deckschicht ein Homopolymer oder Copolymer eines Polyolefins in Verhältnissen von 40 bis 100 Gew.-% und Polypropylen, das durch Pfropfung mit Maleinsäureanhydrid chemisch modifiziert wurde, in Verhältnissen von 60 bis 0 Gew.-% umfassen.

15. Eine Folie nach einem vorstehenden Anspruch, in der das Homopolymer oder Copolymer eines Polyolefins der ersten und zweiten Deckschicht ein ternäres Propylen-Ethylen-Butylen-Copolymer und/oder Polypropylen ist.

16. Eine Folie nach einem vorstehenden Anspruch, die ferner eine Metallisierungsschicht einschließt.

## Revendications

1. Film multicouche biaxialement orienté comprenant :
- une couche de base formée par au moins 50 % de poly(propylène),
- des première et seconde couches de couverture externes disposées sur des côtés opposés de la couche de base et comprenant au moins un homopolymère ou copolymère de poly(oléfine) respectif, et
- au moins une première couche intermédiaire ayant des propriétés de barrière contre l'oxygène, disposée entre la première couche de couverture et la couche de base et comprenant un copolymère d'éthylène et d'alcool vinylique et un agent de compatibilité pour ledit copolymère avec la poly(oléfine), la couche de base et les couches de couverture n'incluant sensiblement pas de copolymère d'éthylène et d'alcool vinylique.

2. Film selon la revendication 1, incluant en outre une seconde couche intermédiaire disposée entre la seconde couche de couverture et la couche de base.

3. Film selon la revendication 1, dans lequel la seconde couche intermédiaire comprend un copolymère d'éthylène et d'alcool vinylique et un agent de compatibilité pour ledit copolymère avec la poly(oléfine).

4. Film selon l'une quelconque des revendications précédentes, dans lequel ladite couche de base et éventuellement ladite première et ladite seconde couche de couverture incluent en outre l'agent de compatibilité pour ledit copolymère avec la poly(oléfine).

5. Film selon l'une quelconque des revendications précédentes, incluant en outre une première couche de compatibilité auxiliaire interposée entre ladite couche de base et ladite première couche intermédiaire, ladite couche de base étant sensiblement formée par du poly(propylène) et ladite première couche intermédiaire étant formée par du poly(propylène) et un agent de compatibilité pour ledit copolymère avec la poly(oléfine).

6. Film selon l'une quelconque des revendications précédentes, incluant en outre une seconde couche de compatibilité auxiliaire interposée entre ladite couche de base et la seconde couche intermédiaire, si elle est présente, ou la seconde couche de couverture, ladite couche de base étant sensiblement formée par du poly(propylène) et ladite seconde couche auxiliaire étant formée par du poly(propylène) et, si elle est en contact avec une couche contenant ledit copolymère, par un agent de compatibilité pour ledit copolymère avec la poly(oléfine).

7. Film selon l'une quelconque des revendications précédentes, dans lequel l'agent de compatibilité pour ledit copolymère avec la poly(oléfine) est un poly(propylène) modifié chimiquement par greffage avec de l'anhydride maléique.

8. Film selon l'une quelconque des revendications précédentes, dans lequel ladite première et ladite seconde couche de couverture ont une épaisseur située entre 0,5 et 3 µm, de préférence entre 1 et 2 µm.

9. Film selon l'une quelconque des revendications précédentes, dans lequel la première couche intermédiaire et la seconde couche intermédiaire, si elles sont présentes, ont une épaisseur située entre 1 et 6 µm, de préférence entre 2 et 5 µm.

10. Film selon l'une quelconque des revendications précédentes, dans lequel ladite couche de base a une épaisseur située entre 7 et 70 µm.

11. Film selon l'une quelconque des revendications 5 à 10, dans lequel ladite première couche auxiliaire et ladite seconde couche auxiliaire, si elles sont présentes, ont une épaisseur située entre 0,5 et 5 µm.

12. Film selon l'une quelconque des revendications précédentes, dans lequel ladite couche de base et, si elles sont présentes, lesdites première et seconde couches auxiliaires, comprennent du poly(propylène) dans des rapports de 50 à 100 % en poids et du poly(propylène) modifié chimiquement au moyen d'un greffage avec de l'anhydride maléique dans des rapports de 50 à 0 % en poids.

13. Film selon l'une quelconque des revendications précédentes, dans lequel la première couche intermédiaire et la seconde couche intermédiaire, si elles sont présentes, comprennent un copolymère d'éthylène et d'alcool vinylique dans des rapports de 30 à 90 % en poids et du poly(propylène) modifié chimiquement par greffage avec de l'anhydride maléique dans des rapports de 70 à 10 % en poids.

14. Film selon l'une quelconque des revendications précédentes, dans lequel lesdites première et seconde couches de couverture comprennent un homopolymère ou copolymère de poly(oléfine) dans des rapports de 40 à 100 % en poids et du poly(propylène) modifié chimiquement par greffage avec de l'anhydride maléique dans des rapports de 60 à 0 % en poids.

15. Film selon l'une quelconque des revendications précédentes, dans lequel ledit homopolymère ou copolymère de poly(oléfine) des première et seconde couches de couverture est un copolymère ternaire de propylène-éthylène-butylène et/ou du poly(propylène).

16. Film selon l'une quelconque des revendications précédentes, incluant en outre une couche de métallisation.
